# EUROPEAN PATENT APPLICATION

(11) **EP 1 431 921 A2**
(43) Date of publication of application: **23.06.2004**
(21) Application number: 03028656.1
(22) Date of filing: 16.12.2003
(51) Int. Cl.: G06T 11/60

(54) **Image layout processing apparatus, method, and program**

(30) Priority: 17.12.2002 JP 2002365080
(71) Applicant: SEIKO EPSON CORPORATION, Shinjuku-ku, Tokyo 163-0811 (JP)
(72) Inventor: Nagahashi, Toshinori, Suwa-shi Nagano-ken 392-8502 (JP); Nagahara, Atsushi, Suwa-shi Nagano-ken 392-8502 (JP)
(74) Representative: Hoffmann, Eckart, Dipl.-Ing.

(57) **Abstract**

A picture layout processing apparatus including an attractive region calculation device which calculates an attractive region in a second picture which is overlapped and is behind a first picture, and a layout processing device which conducts layout processing so that the attractive region in the second picture is not hidden by the first picture.

## Description

### BACKGROUND OF THE INVENTION

Priority is claimed on Japanese Patent Application No. 2002-365080 filed on December 17, 2002, the content of which is incorporated herein by reference.

### Field of the Invention

The present invention relates to a picture layout processing apparatus, a picture layout processing method, and a program which can automatically conduct layout processing (layout processing for pictures) of digital pictures (hereinafter called as "pictures") taken by a digital camera, etc. In particular, the present invention relates to a picture layout processing apparatus, a picture layout processing method, and a program which can automatically conduct layout processing so that an attractive region in a picture is not hidden in the case in which the picture is overlapped and is behind other pictures.

### Description of Related Art

In recent years, a digital cameras have come into wide use, and this enables downloading of pictures to a PC (Personal Computer), editing the pictures, and then printing the pictures easily. For example, a travel album, etc., can be easily made by editing digital pictures which were taken during travels using a digital camera.

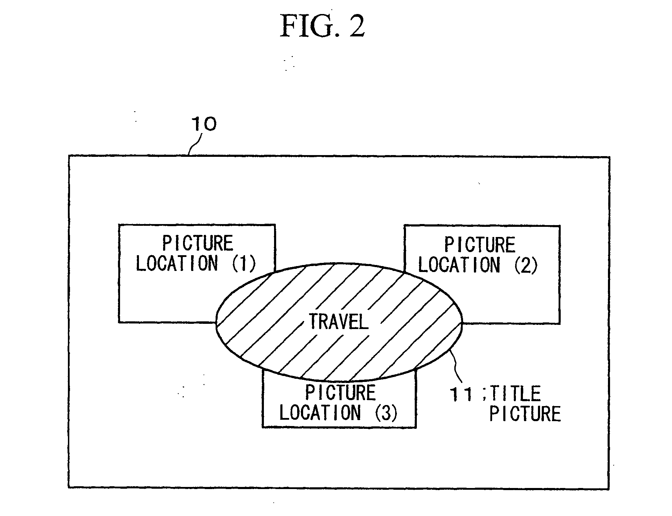

In the case in which these digital pictures are edited, as shown in FIG. 2, there is a case in which layout is conducted so that plural digital pictures are placed behind and around a title picture 11 which shows a main title. In such a layout, conventionally, users conduct manual layout using a mouse, etc. so that attractive regions (conspicuous regions) in the digital pictures are not hidden.

A manual layout will not take much time and will not result in problems if the number of digital pictures is small. However, in the case in which making an album by editing numerous digital pictures, etc., such manual layout work becomes time-consuming.

In addition, with the spread of digital cameras, types of the users are also braodened. In such users, there are those who are not skilled in using PC's, and thus a provision of an apparatus which can conduct layout processing of overlapping digital pictures more easily, is desired.

As a conventional technology for layout processing of such digital pictures, there is, for example, "PICTURE PROCESSING METHOD, APPARATUS, AND RECORDING MEDIA" described in Japanese Patent Application No. 2000-261649.

In the invention disclosed in the conventional technology, by registering a layout name corresponding to plural editing information provided to the pictures, and to selection conditions for selecting the pictures, reuse of the information corresponding to an order of the layout name can be made. This can enhance operability in the case of ordering the same layout using different pictures. In addition, operability in the case in which inputting a selection condition for selecting a desired picture in the plural pictures can be enhanced.

However, the invention disclosed in the conventional technology is premised on that layout processing being conducted by an operator (user) himself or herself manually, and thus, layout processing of overlapping digital pictures cannot be done easily.

### SUMMARY OF THE INVENTION

The present invention was made in view of the above. An object thereof is to provide a picture layout processing apparatus, a picture layout processing method, and a program, which can automatically conduct overlapping of plural pictures preventing the attractive regions from being hidden in the case of conducting a layout processing of overlapping the plural pictures.

To achieve this object, a picture layout processing apparatus which conducts layout processing for plural pictures includes: an attractive region calculation device which calculates an attractive region in a second picture A which is overlapped and is behind a first picture B; and a layout processing device which conducts layout processing so that the attractive region in the second picture A is not overlapped by the first picture B.

According to the picture layout processing apparatus, the attractive region calculation device calculates a part of attractive region which has high attractivity, included in the second picture A which is overlapped and is behind the first picture B. In addition, the layout processing device conducts overlapping preventing of the attractive region when the second picture A is overlapped by the first picture B. In this way, in the case of conducting a layout process, preventing the overlapping of the attractive region can be made automatically.

In addition, a picture layout processing apparatus according to the above picture layout processing apparatus further includes a template memory device which stores a group of templates which defines layouts for plural pictures; and a template selection device which selects the template in the template memory means; the layout processing device conducts layout processing for plural pictures based on the selected template, so that the attractive region of each pictures are not overlapped.

According to the above picture layout apparatus, the template memory device stores a group of templates which defines layouts of plural pictures. In addition, the template selection device selects a template in the group of templates stored. In addition, the layout processing device conducts layout processing according to the selected template. In this case, the layout processing is conducted so that overlapping of the attractive regions in each picture which will be layout-processed, is prevented. By this, overlapping preventing the attractive regions can automatically be done in the case of conducting layout processing for plural pictures. Furthermore, a layout processing with selecting a desired configuration can be done by selecting the template.

In addition, a picture layout processing apparatus according to the above picture layout processing apparatus further includes a device which selects another template in the case in which a layout of the plural pictures cannot be decided based on the selected template.

According to the above picture layout processing apparatus, when conducting layout processing of plural pictures, in the case in which overlapping preventing the attractive regions cannot be performed, retry of executing a layout processing operation can be made by selecting another template.

In addition, a picture layout processing method of the present invention is a picture layout processing method which conducts layout processing of plural pictures; including the steps of calculating an attractive region calculation, the attractive region calculation calculating an attractive region in a second picture A which is overlapped and is behind a first picture B; and a layout processing step which conducts layout processing so that the attractive region in the second picture A is not overlapped by the first picture B.

According to the above picture layout processing method, a part of an attractive region which has high attractivity, included in the second picture A which is overlapped and is behind the first picture B is calculated by the attractive region calculation step. In addition, preventing overlapping of the attractive region in the second picture A by the first picture B, is conducted by the layout processing step. In this way, in the case of conducting a layout process of plural pictures, preventing the overlap of the attractive region can automatically be made.

In addition, a computer program of the present invention is a program which makes a computer in a picture layout processing apparatus which conducts layout processing of plural pictures to execute a process including the steps of calculating an attractive region calculation which calculates an attractive region in a second picture A which is overlapped and is behind a first picture B; and conducting a layout processing which conducts layout processing so that the attractive region in the second picture A is not overlapped by the first picture B.

### BRIEF DESCRIPTION OF THE DRAWINGS

FIG. 1 shows an embodiment of a picture layout processing apparatus of the present invention, and also shows a configuration thereof.
FIG. 2 shows an example of layout.
FIG. 3 shows schematically an example of picture in which a person is placed on the left side.
FIG. 4 shows schematically a pattern of eye-catching degree corresponding to FIG. 3.
FIG. 5 shows schematically an example of a picture of which a flower is placed on the right side.
FIG. 6 shows schematically a pattern of eye-catching degree corresponding to FIG. 5.
FIG. 7 shows an example in which pictures which were overlapped are separated.
FIG. 8 shows process steps in the picture layout processing apparatus of the present invention.
FIG. 9 shows a block diagram of the picture layout processing apparatus, showing a configuration example.

### DETAILED DESCRIPTION OF THE INVENTION

An embodiment of the present invention will be explained below referring to the figures.

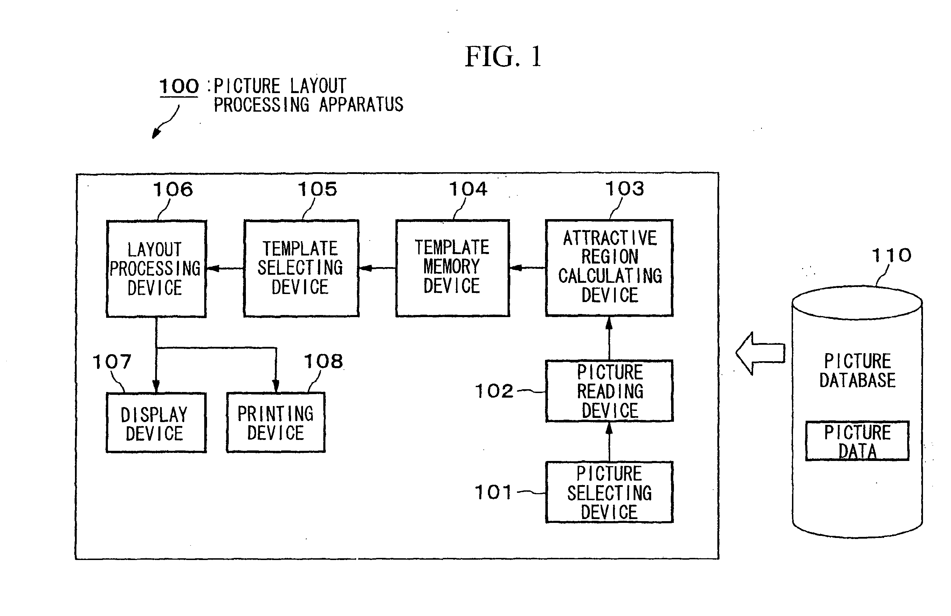

FIG. 1 shows a configuration example of a picture layout processing apparatus 100 of the present invention. Each device provided in the picture layout processing apparatus 100 shown in FIG. 1 conducts the following processes.

A picture selecting device 101 is for selecting pictures (pictures, characters, figures, etc.) which will be the subjects of layout processing, in a picture database 110.

A picture reading device 102 is for reading a number (RGB number, etc.) for each pixel which composes a picture.

An attractive region calculating device 103 is for calculating the attractive regions. The attractive region calculating device 103 divides a picture into plural regions, and distinguishes the attraction levels of the divided regions into more than 2 levels. For this calculation of the attraction degree, for example, "eye-catching degree" disclosed in Japanese Patent Application No. 2001-126070 "ATTRACTIVE REGION SAMPLING APPARATUS AND AUTOMATIC COMPOSITION DEFINITION APPARATUS USING THEREOF", can be applied. Moreover, the eye-catching degree will be briefly explained in the section "Additional explanation of the eye-catching degree" below.

A template memory device 104 is for storing templates in which layouts of pictures are described.

A template selecting device 105 is for selecting the templates in which layouts of pictures are described.

A layout processing device 106 is for placing plural pictures, characters, figures, etc. based on the template selected by the template selecting device 105.

A display device 107 is for making a display apparatus display the result of the layout processing.

A printer device is for printing the result of the layout processing.

In addition, FIG. 2 shows an example of a layout. This FIG. 2 shows an example of conducting layout processing of pictures taken, having some main title (the period of attendance at school, travel period, travel sites, etc.), based on a template 10. FIG. 2 shows an example of conducting a layout processing by placing three digital pictures (pictures which were taken by a digital camera, and were stored in the picture database 110) at a picture location (1), a picture location (2), and a picture location (3) which are behind a title picture 11 showing main title.

In the case in which conducting this layout processing, at first, the template 10 having a style shown in FIG. 2 will be selected using functions of the template memory device 104 and the template selecting device 105. Then, plural pictures are placed based on the template 10 by the layout processing device 106. In the example shown in FIG. 2, the title picture 11 is placed at a center location, and one of each of the pictures is placed at the picture locations (1) through (3) being overlapped and behind the title picture 11. Furthermore, each picture to be placed at the picture locations (1) through (3) are subjected to the layout processing so that the attractive regions in each pictures are not hidden behind the title picture 11.

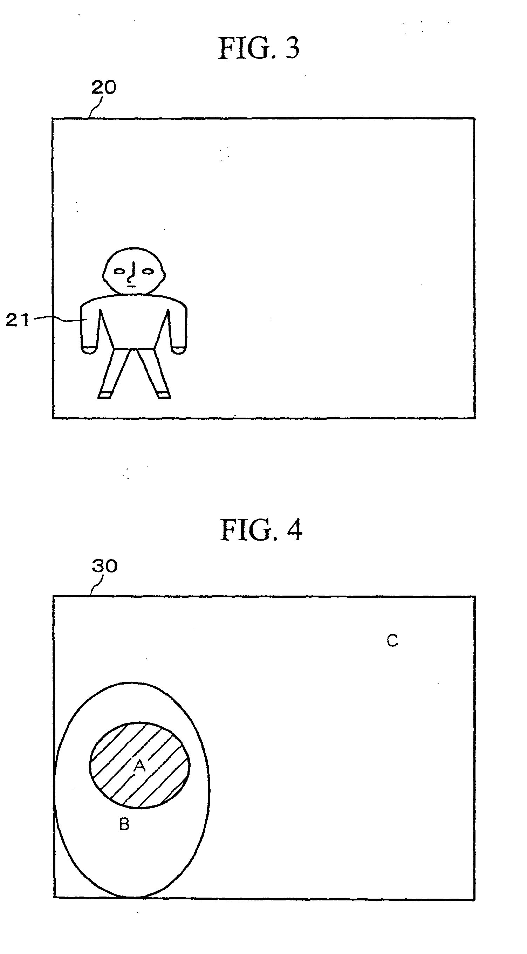

In addition, FIG. 3 shows schematically an example of picture 20 in which a person 21 is placed on the left side. FIG. 4 shows schematically a pattern of eye-catching degree corresponding to FIG. 3. Within a screen 30 shown in FIG. 4, the eye-catching degree is calculated so that it becomes highest at region A, then the eye-catching degree decreases in the order of region B and region C.

In addition, in the case in which the picture shown in FIG. 3 is placed following the layout (template 10) shown in FIG. 2, to avoid the attractive region being hidden behind the title picture 11, it is preferable to place the picture at the picture location (1) and not to place the picture at the picture locations (2) and (3).

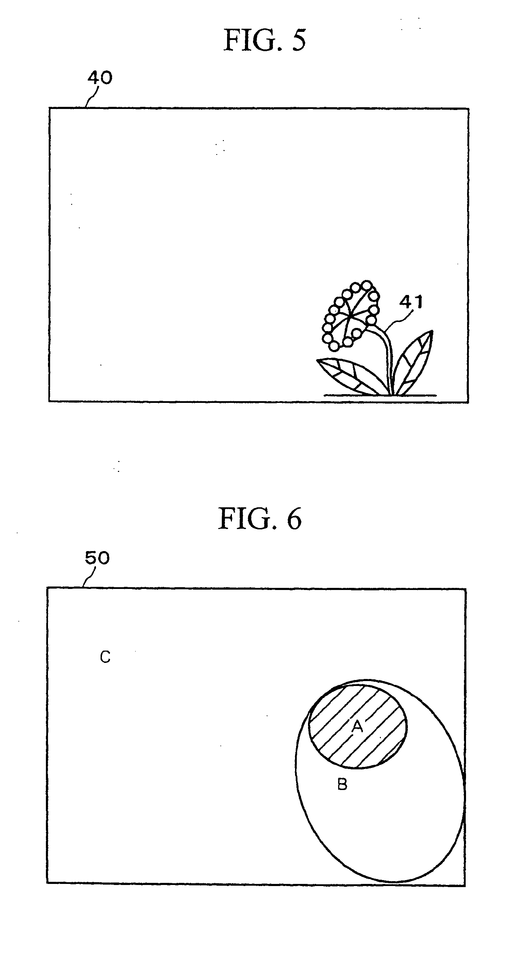

FIG. 5 shows schematically an example of a picture 40 of which a flower 41 is placed on the right side, FIG. 6 shows schematically a pattern of eye-catching degree corresponding to FIG. 5. Within a screen 50 shown in FIG. 6, the eye-catching degree is calculated so that it becomes highest at region A, then the eye-catching degree decreases in the order of region B and region C.

In addition, in the case in which the picture shown in FIG. 5 is placed following the layout (template 10) shown in FIG. 2, it is preferable to place the picture at the picture location (2) and not to place the picture at the picture locations (1) and (3).

A layout of pictures is decided according to the method explained above.

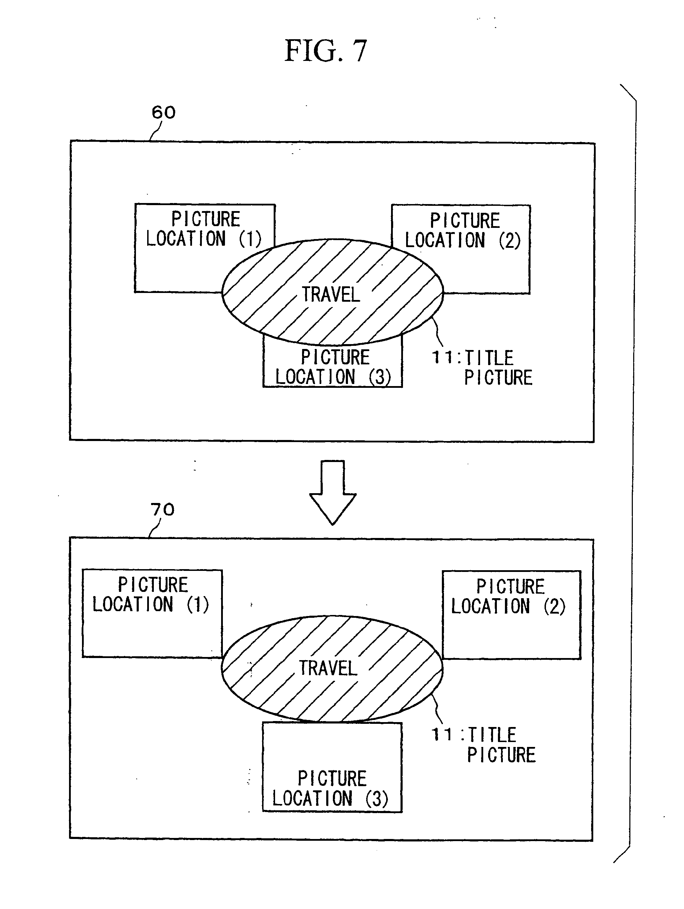

The lower part of FIG. 7 shows an example which does not overlap pictures. That is, FIG. 7 shows an example in which the attractive regions cannot be seen as shown in the upper part of FIG. 7 because regions having high eye-catching degree are overlapped and are behind the title picture 11. In this case, the layout processing is conducted by selecting, for example, a template 70 instead of the template 60 so that no picture overlaps another.

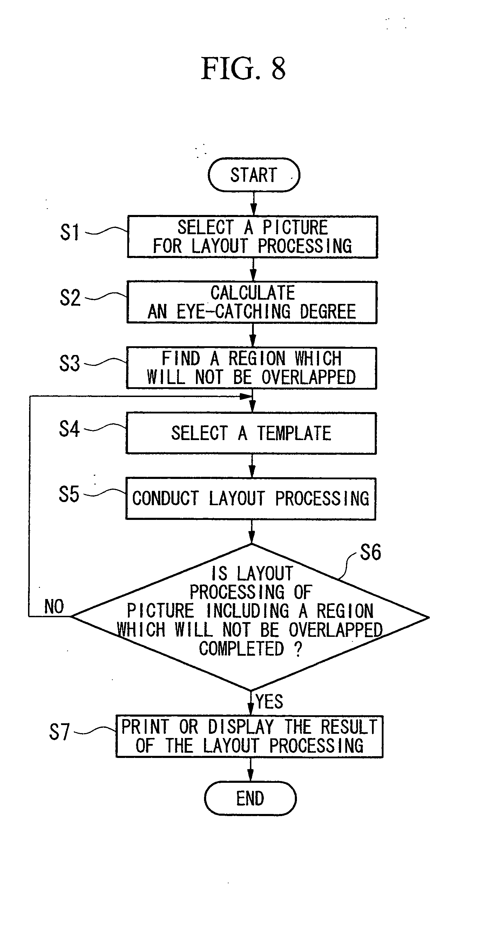

FIG. 8 shows a process steps in the picture layout processing apparatus 100 of the present embodiment, and is a flowchart showing the steps of layout processing using the eye-catching degree. The flow chart will be explained below.
(a) STEP S1: The picture selecting device 101 selects a picture which will be subjected to layout processing in the picture database 110.
(b) STEP S2: The picture reading device 102 reads out data which composes pixels (for example, RGB numbers) from all of the selected pictures. Then, the attractive region calculating device 103 calculates the eye-catching degree. Furthermore, the attractive region calculating device 103 produces patterns of the attractive regions (eye-catching degree).
(c) STEP S3: For all of the pictures, regions which will not be overlapped are decided based on the patterns of eye-catching degree.
(d) STEP S4: The template selecting device 105 selects one template in the template memory device 104.
(e) STEP S5: Following the selected template, the layout processing device 106 conducts layout processing so that regions having high eye-catching degree are not hidden.
(f) STEP S6: A check will be conducted whether the layout processing was done without overlapping of regions having high eye-catching degree. In the case in which the layout processing could not be done without overlapping of regions having high eye-catching degree, the next template will be selected (returns to STEP S4).
(g) STEP S7: The result of layout processing will be displayed by the display device 107, or will be printed by a printing device 108.

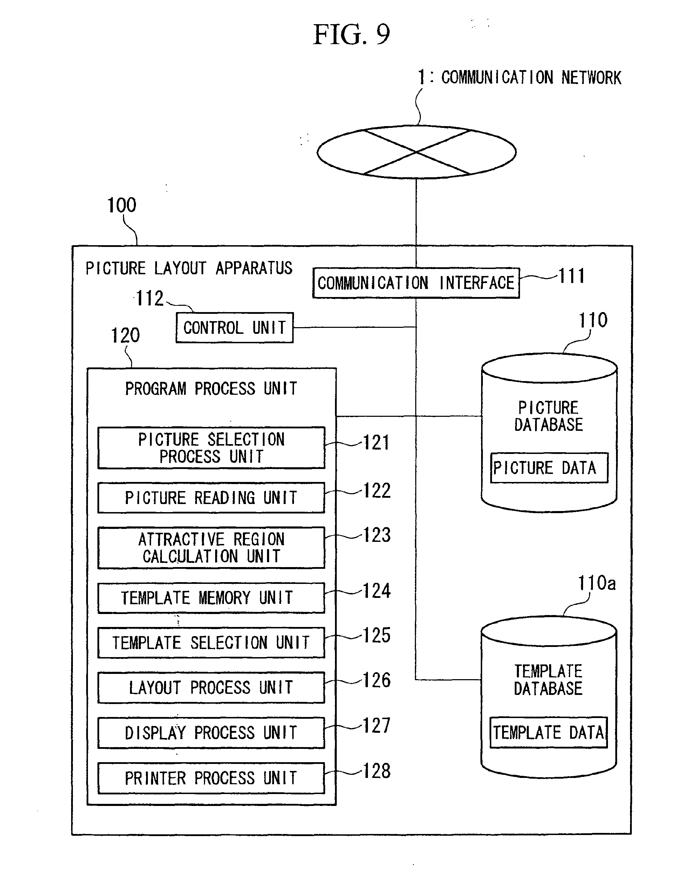

FIG. 9 shows a block diagram of the picture layout processing apparatus 100 of the present embodiment, and only the directly corresponding part to the present invention is shown. In the FIG. 9, the reference symbol 100 denotes a picture layout processing apparatus, the reference symbol 1 denotes a communication network such as an internet, the reference symbol 111 denotes a communication interface connecting between the picture layout processing apparatus 100 and the communication network 1, the reference symbol 112 denotes a control unit which totally controls the entirely of the picture layout processing apparatus 100, and the reference symbol 120 denotes a program process unit. Moreover, the picture layout processing apparatus 100 of the present embodiment can be realized by using a PC (Personal Computer).

The program process unit 120 includes the following process units.
(a) A picture selection process unit 121 is for selecting pictures which will be subjected to a layout processing, in the picture database 110.

A picture reading unit 122 is for reading a number (RGB number, etc.) for each pixel which composes a picture.

An attractive region calculation unit 123 is a process unit for calculating an attractive regions. The attractive region calculation unit 123 divides a picture into plural regions, and distinguishes the attraction levels of the divided regions into more than 2 levels. For this calculation of the attraction degree, for example, "eye-catching degree" disclosed in Japanese Patent Application No. 2001-126070 "ATTRACTIVE REGION SAMPLING APPARATUS AND AUTOMATIC COMPOSITION DEFINITION APPARATUS USING THEREOF", can be applied.

A template memory unit 124 is a process unit for storing templates in which layouts of pictures are described. Data of the templates are stored in a template database 110a.

A template selection process unit 125 is a process unit for selecting the templates in which layouts of pictures are described, in the template database 110a.

A layout process unit 126 is a process unit for placing plural pictures, characters, figures, etc., based on the template selected by the template selection unit 125, so that the attractive regions are not hidden.

A display process unit 127 is a process unit for making a display apparatus display the result of the layout processing.

A printer process unit 128 is a process unit for printing the result of the layout processing.

Moreover, the program process unit 120 can be realized by utilizing a special order hardware. Otherwise, the program process unit 120 can be realized by composing it using a commercial use information process devices such as a memory and a CPU (Central Processing Unit), etc., and by loading a program (not shown in figures) which realizes each functions of each process unit, to a memory, and by executing the program.

As peripherals, an inputting device, a display device, a printer device, etc. (none of which are shown in the figures) are connected to the picture layout processing apparatus 100. The inputting device is a keyboard, a mouse, etc. The display device is a CRT (Cathode Ray Tube), a liquid crystal display device, etc. The printer device is a laser printer, an ink-jet printer, etc.

It is possible to make the picture layout processing apparatus 100 conduct necessary process by recording a program for realizing the functions of the picture layout processing apparatus 100 into a recording media which can be read out by a computer, and by making the computer read the program in the recording media, and by making the computer execute the program. Moreover, "the computer system" includes an OS (Operating System) and hardware such as peripherals, etc.

In addition, if the "computer system" utilizes the WWW (World Wide Web) system, the "computer system" also includes an environment of supplying homepages (otherwise an environment of displaying homepages). In addition, the "recording media which can be read out by a computer" means a portable recording media such as a flexible disk, a magneto-optical disk, a ROM, a CD-ROM, and a recording device such as a hard disk installed in a computer system, etc.

Furthermore, the "recording media which can be read out by a computer" described above includes, for example, communication wires for transferring a program through the communication wires such as a network of an internet, etc., and a telephone line, which dynamically holds a program in a short time (transfer media or transfer wave). Also, the "recording media which can be read out by a computer" described above also includes a device which holds the program for a certain time, such as a volatile memory installed in servers and a computer system which will be the client.

The program described above may be one which realizes at least someof the functions described above. Furthermore, the program described above may be a so-called finite difference file (finite difference program) which can realize the functions described above by combining with a program already installed in the computer system.

Although the present embodiment was explained above, the picture layout processing apparatus of the present invention is not only limited by the configuration described above, some kinds of modifications can be made without departing from the spirit or scope of the present invention.

Moreover, in conventional techniques ("PICTURE PROCESSING METHOD, APPARATUS, AND RECORDING MEDIA" described in Japanese Patent Application No. 2000-261649) is based on the assumption that an operator (user) manually conducts layout processing of pictures, and the purpose is to reuse a layout information thereof. Therefore, it is quite different from the present invention which makes a computer conduct automatic layout processing so that overlapping of the attractive regions does not occur, in the case of conducting layout processing by overlapping pictures. Additional explanation for the eye-catching degree

In the above embodiment, the "eye-catching degree" is utilized for one example of standard for extracting the attractive regions. One example of a calculation method of the "eye-catching degree" is particularly disclosed in Japanese Patent Application No. 2001-126070 "ATTRACTIVE REGION SAMPLING APPARATUS AND AUTOMATIC COMPOSITION DEFINITION APPARATUS USING THEREOF".

Only a summary will be given below.

To extract the attractive regions, the eye-catching degree is evaluated following the physical characteristics of original pictures. Here, the "eye-catching degree" means a parameter which conforms to human subjective judgement. An extraction of the attractive regions is done by extracting the most outstanding region based on the evaluation results, as the attractive region. That is, an attractive region which matches with the human subjectivity can be extracted because evaluation which conforms to the human subjectivity will be conducted, when evaluating the attractive regions.

For example, if the physical characteristics include color differences, the eye-catching degree can be evaluated based on the color differences.

Furthermore, if the physical characteristics include a shape difference, an area difference, and a texture difference in addition to the color difference, the eye-catching degree can be reliably evaluated corresponding to the characteristics of the original pictures by evaluating them based on at least one of the four differences.

In addition, in the case in which three-color-elements (coloring, chromaticness, brightness) are also evaluated, a region close to the one having a color which a human would feel the most outstanding (red color), can be evaluated as the most outstanding region.

Furthermore, evaluation of the most outstanding region can be judged more surely if spatial frequency and each region area of the original pictures are also evaluated.

In addition, evaluation of the eye-catching degree is conducted by the following steps.
(1) First, divide the original picture into plural regions. In this case, the original picture is divided into a figure region and a picture region. As for the method of dividing regions, for example, a boundary detection method based on the "edge flow" described in the "Edge Flow: A Framework of Boundary Detection and Image Segmentation" by W.Y. Ma, B.S.Manjunath, et al.
(2) Next, the figure region objected by the above division is extracted, then the eye-catching degree of the figure region is evaluated.
   The eye-catching degree is roughly evaluated by conducting the followings.
   (a) First, heterogeity eye-catching degree of each region is evaluated. In this case, the heterogeity eye-catching degree of each region is estimated by looking for each of heterogeity of color, heterogeneity of texture, heterogeneity of shape, and heterogeneity of areas, then by providing an importance coefficient on them, then by conducting a linear connection.
   (b) Next, characteristic eye-catching degree of each region is evaluated. In this case, the characteristic eye-catching degree of each region is estimated by looking for each of eye-catching degree of color, eye-catching degree of spatial frequency, eye-catching degree of areas, then by providing an importance coefficient on them, then by conducting a linear connection.
   (c) Next, total number of characteristics quantity is estimated by adding the heterogeity eye-catching degree of each region and the characteristic eye-catching degree of each region each other. Then the eye-catching degree is calculated by evaluating the total number of characteristics quantity based on a predetermined beta function.
(3) Next, a pattern figure which evaluated the eye-catching degree is produced from the original pictures.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

## Claims

1. A picture layout processing apparatus which conducts layout processing for plural pictures; comprising:
an attractive region calculation means which calculates an attractive region in a second picture which is overlapped and is behind a first picture; and
a layout processing means which conducts layout processing so that the attractive region in said second picture is not overlapped by and hidden by said first picture.

2. A picture layout processing apparatus according to claim 1, further comprising:
a template memory means which stores a group of templates which defines layouts for plural pictures; and
a template selection means which selects said template in said template memory means:
said layout processing means conducts layout processing for plural pictures based on said selected template, so that the attractive region of each pictures is not hidden.

3. A picture layout processing apparatus according to claim 2, further comprising:
a means which selects another template in the case in which a layout of said plural pictures cannot be decided based on said selected template.

4. A picture layout processing method for conducting layout processing of plural pictures, comprising the steps of:
calculating an attractive region calculation which calculates an attractive region in a second picture overlapped and behind a first picture; and
a layout processing step which conducts layout processing so that the attractive region in said second picture is not hidden by said first picture.

5. A program for making a computer in a picture layout processing apparatus which conducts layout processing of plural pictures, to execute a process comprising the steps of:
calculating an attractive region calculation which calculates an attractive region in a second picture overlapped and behind a first picture; and
a layout processing step which conducts layout processing so that the attractive region in said second picture is not hidden by said first picture.
